# EUROPÄISCHE PATENTSCHRIFT

(11) **EP 2 161 149 B1**
(45) Veröffentlichungstag und Bekanntmachung des Hinweises auf die Patenterteilung: **13.11.2013**
(21) Anmeldenummer: 09011309.3
(22) Anmeldetag: 03.09.2009
(51) Int. Cl.: B60J 5/00, B60R 16/02, F16L 3/00, F16L 5/00, H01R 13/00, H02G 3/22, F16L 5/02, F16L 5/08

(54) **Wanddurchführung**
Wall bushing
Passage de mur

(30) Priorität: 03.09.2008 DE 102008045466; 01.10.2008 DE 102008049863
(43) Veröffentlichungstag der Anmeldung: 10.03.2010
(73) Patentinhaber: Winkler Gesellschaft mit beschränkter Haftung, 69126 Heidelberg (DE)
(72) Erfinder: Zenner, Andreas, 76530 Baden-Baden (DE); Mayer, Frank, 69168 Wiesloch (DE)
(74) Vertreter: Ullrich & Naumann

(56) Entgegenhaltungen:
- EP-A1- 1 841 032
- WO-A1-2005/046016
- DE-U1- 8 805 695
- US-A- 4 086 736
- US-A- 4 607 469

## Beschreibung

Die Erfindung betrifft eine Wanddurchführung mit einem in einen Wanddurchgang einer Wand einsetzbaren Gehäuse und einem in dem Gehäuse anordenbaren Verbindungselement, wobei das Verbindungselement in einem in das Gehäuse einsetzbaren Einschub angeordnet ist.

Wanddurchführungen der eingangs genannten Art sind aus der Praxis bekannt und existieren in den unterschiedlichsten Ausführungsformen. Eine typische Wanddurchführung wird bspw. in der Automobilindustrie und dort bspw. in Motor- oder Rollenprüfständen eingesetzt, um in einem Analysenraum und in einem von diesem durch eine feuersichere Wand getrennten Motorraum verlegte Analysenleitungen miteinander zu verbinden. Hierzu wird das Gehäuse der Wanddurchführung in einen Wanddurchgang der Wand eingesetzt und werden die Analysenleitungen in den zu verbindenden Räumen über das in dem Gehäuse anordenbare Verbindungselement verbunden.

Häufig handelt es sich bei den bekannten Wanddurchführungen um beheizte Wanddurchführungen, die beheizte Analysenleitungen miteinander verbinden können. Derartige beheizte Analysenleitungen werden zum unverfälschten Transport von Messgasproben von der Entnahmestelle zum Analysegerät eingesetzt. Beheizte Wanddurchführungen stellen hierbei zum einen die Temperaturerhaltung im Wanddurchgang sicher und verhindern durch eine separate Regelung, dass sich eine ansonsten direkt durch die Wand verlegte Analysenleitung an dieser Stelle überhitzt. Derartige Wanddurchführungen müssen darüber hinaus fallweise besonderen Anforderungen an die Brandsicherheit genügen.

Bei einer herkömmlichen Wanddurchführung besteht das Gehäuse aus zwei Gehäusehälften, die über einen verbundenen Flansch mit Befestigungen mit der Wand verbunden werden können, in der sich ein bspw. runder Durchgang für die Wanddurchführung befindet. Die beiden Gehäusehälften überlappen sich mit einem vorgebbaren Spiel in dem Durchgang, um evtl. Maß- und Winkelabweichungen der Wand in gewissem Umfang aufzufangen.

In der Praxis hat sich jedoch gezeigt, dass die bekannte Wanddurchführung bei größeren Abweichungen der Wandseiten im Hinblick auf deren Abstand und Parallelität zueinander nicht günstig ist. Im Konkreten können in den letztgenannten Fällen problematische Undichtigkeiten entstehen, die die Funktion der Wanddurchführung insoweit beeinträchtigen, als sie die Dichtigkeit zwischen den voneinander getrennten Räumen nicht mehr in der geeigneten Weise aufrecht erhalten kann. Des Weiteren sind bei der bekannten Wanddurchführung die Montage bei der Installation und die Demontage im Wartungsfall sehr umständlich und zweitaufwändig.

Aus der EP 1 841 032 A1 ist eine hitzebeständige Wanddurchführung bekannt. Diese weist ein in einen Wanddurchgang 11 einer Wand 10 einsetzbares Gehäuse 13 und ein in dem Gehäuse 13 anordenbares Verbindungselement 15 auf. Das Verbindungselement 15 ist dabei in dem Gehäuse 13 angeordnet. Die bekannte Wanddurchführung weist des Weiteren Begrenzungsmittel 17, 18 auf, die nach dem Verbindungselement 15 in das Gehäuse 13 eingesetzt und mit einer Überwurfmutter 19, die auf das Gehäuse 13 aufgeschraubt werden kann, gesichert sind. Das Verbindungselement 15 weist eine durchgehende Öffnung 16 auf, die als Durchgangsschlitz ausgebildet ist. Hierdurch kann ein Flachbandkabel geführt werden.

Eine weitere Wanddurchführung ist aus der US 4 086 736 A bekannt. Die Wanddurchführung weist ein in einen Wanddurchgang einer Wand 10 einsetzbares Gehäuse 18 und ein in dem Gehäuse 18 anordenbares Verbindungselement 16 auf. Das Verbindungselement 16 ist in einem in das Gehäuse 18 einsetzbaren Einschub 24 angeordnet.

Bei den aus den vorgenannten Druckschriften bekannten Wanddurchführungen ist jeweils nachteilig, dass das Verbindungselement und insbesondere das darin befindliche Medium Einflüssen durch die in der Wand vorherrschenden Temperaturverhältnisse unterllegen.

Ausgehend vom gattungsbildenden Stand der Technik liegt der Erfindung die Aufgabe zugrunde, eine Wanddurchführung der Eingangs genannten Art anzugeben, bei der eine sichere Funktion und eine vielseitige Einsetzbarkeit mit konstruktiv einfachen Mitteln realisiert ist.

Erfindungsgemäß wird die voranstehende Aufgabe durch eine Wanddurchführung mit den Merkmalen des Anspruchs 1 gelöst. In erfindungsgemäßer Weise ist erkannt worden, dass durch eine Heizeinrichtung, die dem Verbindungselement zugeordnet ist, eine Abkühlung des durch die Wanddurchführung durchzuführenden Mediums vermeidbar ist. Erfindungsgemäß ist ferner erkannt worden, dass durch ein Kühleinrichtung, die dem Verbindungselement in ähnlicher Weise zugeordnet ist, eine Überhitzung im Bereich der Wanddurchführung vermieden werden kann.

Hinsichtlich einer besonders sicheren Dichtwirkung zwischen Gehäuse und Wanddurchgang könnte das Gehäuse einteilig ausgebildet sein. Mit anderen Worten sind Flanschverbindungen wie bei der herkömmlichen Wanddurchführung im Innenbereich des Wanddurchgangs hierdurch vermieden. Abdichtungen zwischen Gehäuse und Wanddurchgang bzw. Wand können auf einfache Weise an den Außenseiten der Wand vorgenommen werden.

Zur besonders einfachen Aufnahme des Einschubs könnte das Gehäuse rohrförmig ausgebildet sein. Hierdurch ist ein Einsetzen des Einschubs von beiden Seiten des Gehäuses aus und damit von beiden Wandseiten aus ermöglicht.

In weiter besonders einfacher Weise könnte das Gehäuse kreiszylinderförmig ausgebildet sein. Hierdurch ist eine einfache Anpassung des Gehäuses an bspw. Bohrungen in der Wand ermöglicht, die als Wanddurchgang dienen.

Das Gehäuse könnte ebenfalls zum sicheren Einsetzen des Einschubs an beiden Enden offen ausgebildet sein.

Zur sicheren Befestigung des Gehäuses an der Wand könnte das Gehäuse an einem Ende einen Flansch zur Anlage an die Wand aufweisen. Dieser Flansch könnte im Wesentlichen ringförmig ausgebildet sein, um eine sichere Anlage an die Wand bei runden Bohrungen zu gewährleisten.

Im Hinblick auf eine besonders hohe Dichtigkeit könnte der Flansch integral mit dem Gehäuse verbunden sein. Damit bildet der Flansch eine Erweiterung des Gehäuses, die auf sichere Weise an einer Wandseite festlegbar ist.

Im Hinblick auf eine sichere Abdichtung zwischen dem Gehäuse und der Wand könnte dem Flansch eine Dichtung zur Abdichtung gegen die Wand zugeordnet sein. Eine derartige Dichtung könnte durch einen Gummi- oder Kunststoffring gebildet sein, dessen Durchmesser größer als der Durchmesser des Wanddurchgangs sein könnte.

Zur sicheren Befestigung des Gehäuses an der Wand könnte dem Flansch eine Befestigungseinrichtung zur Befestigung an der Wand zugeordnet sein. Als Befestigungseinrichtung könnten durch den Flansch hindurchsteckbare und in die Wand schraubbare Bolzen dienen.

Im Hinblick auf eine besonders hohe Dichtigkeit der Wanddurchführung und damit zur Vermeidung eines ungewünschten Austauschs von in den zu verbindenden Räumen vorhandenen Gasen könnte an einem Ende oder an dem anderen Ende des Gehäuses eine Blende für einen zwischen dem Gehäuse und der Wand vorhandenen Spalt anordenbar sein. Eine derartige Blende könnte ringförmig ausgebildet sein, um bei einer runden Bohrung eine sichere Abdichtung zwischen Gehäuse und Wand zu gewährleisten.

Im Hinblick auf ein einfaches Montieren der Blende könnte der Innendurchmesser der Blende geringfügig größer als der Außendurchmesser des Gehäuses sein. Hierdurch ist ein einfaches Aufstecken der Blende auf das bereits in den Wanddurchgang eingesetzte und aus der Wand herausragende Gehäuse ermöglicht.

Mittels einer derartigen Blende könnte auch eine Zentrierung des Gehäuses in dem Wanddurchgang erfolgen. Hierdurch ist nicht nur eine sichere Positionierung des Gehäuses sondern auch eine sichere Abdichtung zwischen Gehäuse und Wand erreichbar.

Im Hinblick auf eine sichere Aufnahme des Verbindungselements in dem Einschub könnte der Einschub rohrförmig und vorzugsweise kreiszylinderförmig ausgebildet sein. Im letztgenannten Fall ist eine passgenaue Einfügung des Einschubs in ein ebenfalls kreiszylinderförmiges Gehäuse ermöglicht.

Der Einschub könnte an einem Ende einen Boden aufweisen. Alternativ oder zusätzlich hierzu könnte der Einschub an einem Ende oder an dem anderen Ende einen Deckel aufweisen. Hierdurch ist ein sicheres Verschließen des Einschubs und eine geschützte Aufnahme des Verbindungselements in dem Einschub ermöglicht.

Der Boden und/oder der Deckel könnten oder könnte eine umlaufende Dichtung zur Abdichtung gegen das Gehäuse aufweisen. Hierdurch ist eine besonders hohe Dichtigkeit der Wanddurchführung erreichbar.

Der Boden oder der Deckel könnte einen radial abragenden und umlaufenden Bund aufweisen. Mit einem derartigen Bund könnte der Einschubweg des Einschubs in das Gehäuse begrenzt und eine geeignete Position des Einschubs im Gehäuse sicher vorgebbar sein. Der Bund sollte hierzu einen größeren Außendurchmesser als der Innendurchmesser des Gehäuses aufweisen.

Hinsichtlich einer besonders sicheren Anordnung des Einschubs im Gehäuse könnten oder könnte dem Gehäuse und/oder dem Einschub Rast-, Klemm- und/oder Schaubelemente zur gegenseitigen Fixierung zugeordnet sein. In jedem Fall ist ein sicherer Sitz des Einschubs im Gehäuse für die Funktion der Wanddurchführung besonders vorteilhaft. Ein ungewolltes Herausfallen des Einschubs aus dem Gehäuse ist zu vermeiden.

Im Hinblick auf eine sichere Positionierung des Verbindungselements im Einschub könnte sich das Verbindungselement durch einen Durchgang in dem Deckel und/oder Boden erstrecken. Mittels der Durchgänge ist eine Position des Verbindungselements vorgebbar.

Im Konkreten und hinsichtlich einer besonders sicheren Anordnung des Verbindungselements im Einschub könnte das Verbindungselement mittels eines Flanschs an dem Deckel oder Boden fixiert sein. Der Flansch könnte mittels Schrauben an dem Deckel oder Boden befestigbar sein.

In einer besonders vorteilhaften Ausgestaltung könnte das Verbindungselement an einem Ende des Einschubs mittels eines Flanschs an dem Deckel oder Boden fixiert sein und sich an dem anderen Ende durch einen Durchgang in dem Boden oder Deckel erstrecken. Mit anderen Worten wäre das Verbindungselement in diesem Fall mittels des Flanschs am Deckel oder Boden und damit am Einschub fixiert und am anderen Ende lediglich durch den Durchgang hindurchgeführt. Bei einer thermischen Ausdehnung oder Kontraktion des Verbindungselements während seiner Verwendung könnten hierdurch entsprechende temperaturbedingte Verspannungen am Verbindungselement und zwischen dem Verbindungselement und dem Einschub vermieden werden. Mit anderen Worten könnte hierdurch ein "Loslager" im Bereich des Durchgangs für das sich lediglich durch den Durchgang hindurch erstreckende Verbindungselement realisiert sein. Temperaturbedingte Ausdehnungen und/oder Kontraktionen können hierdurch aufgefangen werden, da eine Befestigung des Verbindungselements lediglich an einer Seite des Einschubs vorgenommen ist.

Im Hinblick auf eine sichere Wärmeentkopplung oder thermische Entkopplung zwischen dem Verbindungselement und dem Einschub könnte zwischen dem Verbindungselement und der Innenwandung des Durchgangs zumindest bereichsweise ein Entkopplungselement zur Wärmeentkopplung angeordnet sein. Alternativ oder zusätzlich hierzu könnte in gleicher Weise zwischen dem Flansch und dem Deckel oder Boden zumindest bereichsweise ein Entkopplungselement zur Wärmeentkopplung angeordnet sein.

Bei einer konkreten Ausgestaltung könnte das Verbindungselement mindestens eine Rohr- oder Schlauchstrecke aufweisen. Durch eine derartige Rohr- oder Schlauchstrecke können beliebige gasförmige oder flüssige Medien hindurchgeführt werden.

In besonders vorteilhafter Weise könnten oder könnte die Heizeinrichtung und/oder die Kühleinrichtung einen Regler zur Aufrechterhaltung einer vorgebbaren Temperatur aufweisen. Hierdurch ist eine besonders sichere und unverfälschte Durchführung von Medien durch die Wanddurchführung realisierbar.

Mit der Wanddurchführung können auch größere Abweichungen der Wandseiten hinsichtlich ihrer Parallelität und hinsichtlich ihres Abstands über das Gehäuse ausgeglichen werden. Des Weiteren ist bei der erfindungsgemäßen Wanddurchführung eine einfache Montage möglich, da das Gehäuse und der Einschub separat voneinander montiert werden können. Eine einfache Wartung ist durch lediglich den Austausch des Einschubs möglich. Thermische Ausdehnungen des Verbindungselements oder der Rohr- oder Schlauchstrecke können über die einseitige Befestigung über einen Flansch und ein gegenüber liegendes "Loslager" ausgeglichen werden.

Es gibt nun verschiedene Möglichkeiten, die Lehre der vorliegenden Erfindung in vorteilhafter Weise auszugestalten und weiterzubilden. Dazu ist einerseits auf die nachgeordneten Patentansprüche, andererseits auf die nachfolgende Erläuterung eines Ausführungsbeispiels der erfindungsgemäßen Wanddurchführung anhand der Zeichnung zu verweisen. In Verbindung mit der Erläuterung des bevorzugten Ausführungsbeispiels der erfindungsgemäßen Wanddurchführung anhand der Zeichnung werden auch im Allgemeinen bevorzugte Ausgestaltungen und Weiterbildungen der Lehre erläutert. In der Zeichnung zeigen
- Fig. 1: in einer schematischen und teilweise geschnittenen Seitenansicht ein Ausführungsbeispiel der erfindungsgemäßen Wanddurchführung,
- Fig. 2: in einer schematischen und teilweise geschnitten Seitenansicht das Ausführungsbeispiel aus Fig. 1 mit vollständig eingeschobenem Ein- schub,
- Fig. 3: in einer schematischen und teilweise geschnittenen Seitenansicht das in den Wanddurchgang eingesetzte Gehäuse der Wanddurchführung vor dem Einsetzen des Einschubs und
- Fig. 4: in einer schematischen und teilweise geschnitten Darstellung eine her- kömmliche Wanddurchführung.

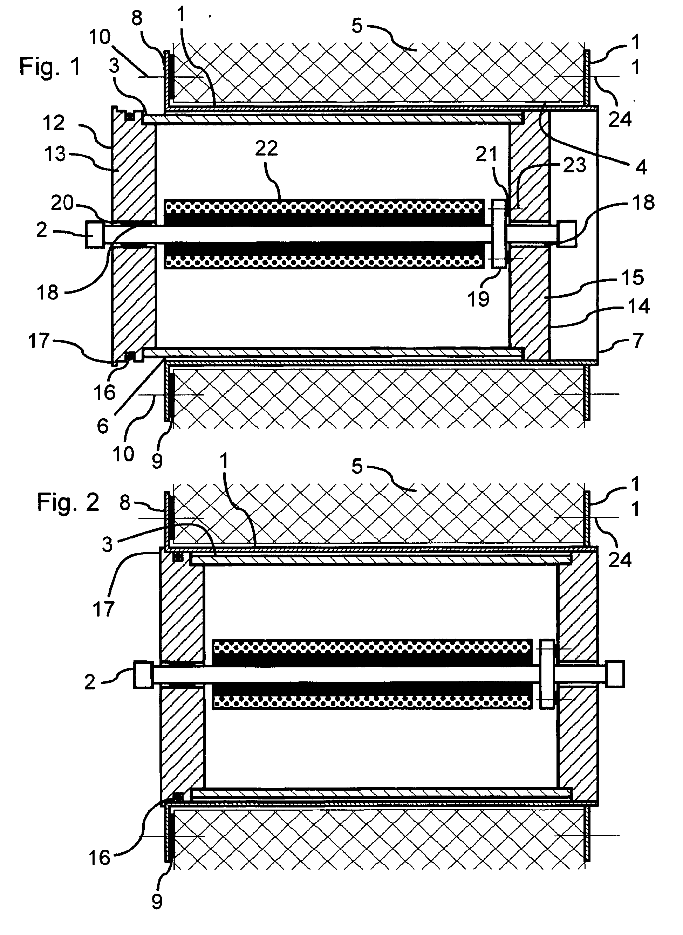

Fig. 1 zeigt in einer schematischen und teilweise geschnittenen Seitenansicht ein Ausführungsbeispiel einer erfindungsgemäßen Wanddurchführung. Die Wanddurchführung weist ein Gehäuse 1 und ein in dem Gehäuse 1 anordenbares Verbindungselement 2 auf, das als Rohr- oder Schlauchstrecke ausgebildet sein kann. Im Hinblick auf eine sichere Funktion und eine einfache Handhabung mit konstruktiv einfachen Mitteln ist das Verbindungselement 2 in einem in das Gehäuse 1 einsetzbaren Einschub 3 angeordnet.

Das Gehäuse 1 ist einteilig ausgebildet und in einen Wanddurchgang 4 einer Wand 5 einsetzbar. Das Gehäuse 1 und der Einschub 3 können separat voneinander montiert werden, wodurch die Montage der Wanddurchführung sehr einfach ist. Mit anderen Worten kann zunächst das Gehäuse 1 in dem Wanddurchgang 4 positioniert werden, bevor der Einschub 3 in das Gehäuse 1 eingesetzt wird. Hierdurch ist auch die Wartung gegenüber herkömmlichen Wanddurchführungen vereinfacht, da zur Wartung lediglich der Einschub 3 aus dem Gehäuse 1 entnommen werden muss. Arbeiten an der Wand 5 selbst bzw. an deren Wandseiten sind hierdurch vermieden.

Das Gehäuse 1 ist kreiszylinderförmig ausgebildet und an beiden Enden 6 und 7 offen ausgebildet. Das Gehäuse 1 weist an einem Ende 6 einen Flansch 8 zur Anlage an die Wand 5 auf. Der Flansch 8 ist integral mit dem Gehäuse 1 verbunden.

Des Weiteren ist dem Flansch 8 eine Dichtung 9 zur Abdichtung gegen die Wand 5 zugeordnet. Die Dichtung 9 ist ringförmig um den Flansch 8 und um den Wanddurchgang 4 herum anordenbar. Zur Befestigung des Gehäuses 1 an der Wand 5 ist dem Flansch 8 eine Befestigungseinrichtung 10 in Form von bspw. Schraubbolzen zugeordnet. Am anderen Ende 7 des Gehäuses 1 ist eine Blende 11 für einen zwischen dem Gehäuse 1 und der Wand 5 vorhandenen Spalt anordenbar. Die Blende 11 ist ringförmig ausgebildet und dient ebenfalls zur Zentrierung des Gehäuses 1 in dem Wanddurchgang 4.

Der Einschub 3 ist im Wesentlichen rohrförmig und kreiszylinderförmig ausgebildet, so dass ein sicheres Einpassen in das Gehäuse 1 ermöglicht ist. In Fig. 1 ist der Einschub 3 der Übersichtlichkeit halber noch nicht ganz im Gehäuse 1 positioniert. Diesbezüglich zeigt Fig. 2 in einer schematischen und teilweise geschnittenen Seitenansicht den im Gehäuse 1 vollständig positionierten Einschub 3.

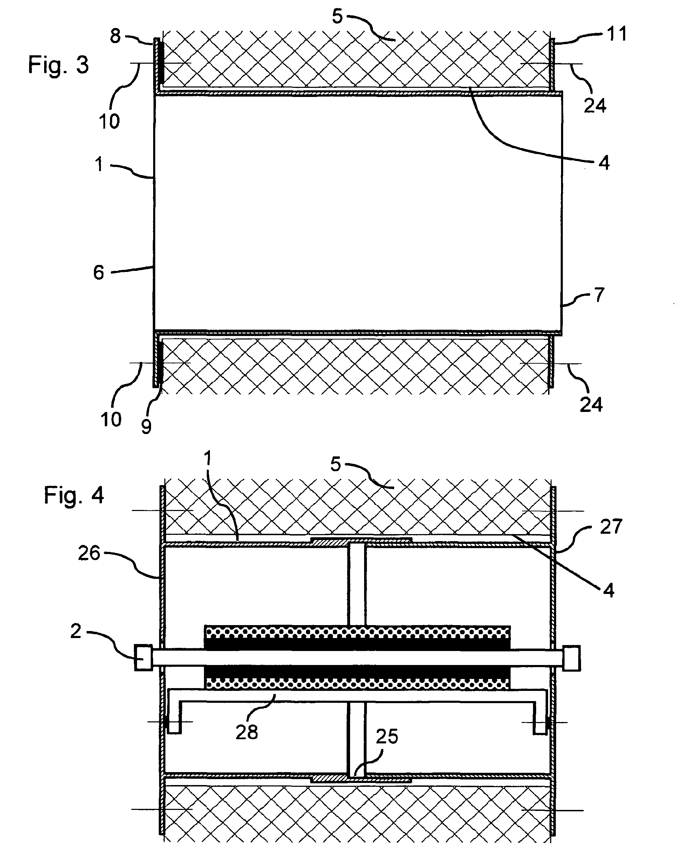

Fig. 3 zeigt in einer schematischen und teilweise geschnittenen Seitenansicht das in dem Wanddurchgang 4 positionierte Gehäuse 1 ohne den Einschub 3.

Der Einschub 3 weist an einem Ende 12 einen Boden 13 auf. Am anderen Ende 14 weist der Einschub 3 einen Deckel 15 auf. Der Boden 13 weist eine umlaufende Dichtung 16 zur Abdichtung gegen das Gehäuse 1 in radialer Richtung auf. Letztendlich bildet der Einschub 3 zusammen mit dem Boden 13 und dem Deckel 15 einen im Wesentlichen geschlossenen Kreiszylinder.

Der Boden 13 weist des Weiteren einen radial abragenden und umlaufenden Bund 17 auf. Der Bund 17 dient zur Begrenzung des Einschubwegs des Einschubs 3 in das Gehäuse 1, wie dies in Fig. 2 erkennbar ist.

Das Verbindungselement 2 erstreckt sich durch einen Durchgang 18 in dem Deckel 15 sowie in dem Boden 13. Zur Fixierung des Verbindungselements 2 in dem Einschub 3 dient ein Flansch 19, der am Deckel 15 mittels eines Befestigungsmittels 23 angeschraubt ist. Am anderen Ende 12 erstreckt sich das Verbindungselement 2 ohne starre Fixierung durch den Durchgang 18 in dem Boden 13 hindurch. Durch dieses "Loslager" im Durchgang 18 des Bodens 13 können thermische Ausdehnungen des Verbindungselements 2 aufgefangen werden. Es liegt lediglich eine einseitige Befestigung des Verbindungselements 2 am Deckel 15 vor.

Zwischen dem Verbindungselement 2 und der Innenwandung des Durchgangs 18 ist zumindest bereichsweise ein Entkopplungselement 20 zur Wärmeentkopplung angeordnet. Des Weiteren ist zwischen dem Flansch 19 und dem Deckel 15 zumindest bereichsweise ein Entkopplungselement 21 zur Wärmeentkopplung angeordnet. Die Entkopplungselemente 20 und 21 können aus Kunststoff, Gummi oder anderen bekannten Isolationsmaterialien oder Dämpfungsmaterialien ausgebildet sein.

Dem Verbindungselement 2 ist eine Heizeinrichtung 22 zugeordnet. Hierdurch kann ein unverfälschter Transport von Messgasproben von einer Entnahmestelle zu einem Analysegerät in durch die Wand 5 voneinander getrennten Räumen erfolgen. Die Temperatur des Messgases kann im Verbindungselement 2 mittels der Heizeinrichtung 22 aufrecht erhalten werden.

Die Blende 11 ist mit einem Befestigungsmittel 24, bspw. ein Schraubbolzen, an der Wand 5 festlegbar.

In dem Einschub 3 können mehrere Verbindungselemente 2 oder mehrere Rohr- oder Schlauchstrecken angeordnet werden.

Fig. 4 zeigt in einer schematischen und teilweise geschnittenen Seitenansicht eine herkömmliche Wanddurchführung mit einem zweiteiligen Gehäuse 1 und einem in dem Gehäuse 1 angeordneten Verbindungselement 2. Das Gehäuse 1 ist in einem Wanddurchgang 4 einer Wand 5 angeordnet. Zwischen den beiden Gehäusehälften 26 und 27 ist ein Überlappungsbereich 25 gebildet, der das Risiko von Undichtigkeiten mit sich bringt. Das Verbindungselement 2 ist auf einem Halter 28 angeordnet.

Hinsichtlich weiterer vorteilhafter Ausgestaltungen der erfindungsgemäßen Wanddurchführung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Wanddurchführung lediglich zur Erörterung der beanspruchten Lehre dient, diese jedoch nicht auf das Ausführungsbeispiel einschränkt.

### Bezugszeichenliste

- 1: Gehäuse
- 2: Verbindungselement
- 3: Einschub
- 4: Wanddurchgang
- 5: Wand
- 6: Ende
- 7: Ende
- 8: Flansch
- 9: Dichtung
- 10: Befestigungseinrichtung
- 11: Blende
- 12: Ende
- 13: Boden
- 14: Ende
- 15: Deckel
- 16: Dichtung
- 17: Bund
- 18: Durchgang
- 19: Flansch
- 20: Entkopplungselement
- 21: Entkopplungselement
- 22: Heizeinrichtung
- 23: Befestigungsmittel
- 24: Befestigungsmittel
- 25: Überlappungsbereich
- 26: Hälfte
- 27: Hälfte
- 28: Halter

## Patentansprüche

1. Wanddurchführung mit einem in einen Wanddurchgang (4) einer Wand (5) einsetzbaren Gehäuse (1) und einem in dem Gehäuse (1) anordenbaren Verbindungselement (2), wobei das Verbindungselement (2) in einem in das Gehäuse (1) einsetzbaren Einschub (3) angeordnet ist,
**dadurch gekennzeichnet, dass** die Wanddurchführung eine Heizeinrichtung (22) und/oder eine Kühleinrichtung aufweist, welche dem Verbindungselement (2) zugeordnet sind oder ist.

2. Wanddurchführung nach Anspruch 1, **dadurch gekennzeichnet, dass** das Gehäuse (1) einteilig und/oder rohrförmig und/oder kreiszylinderförmig ausgebildet ist.

3. Wanddurchführung nach Anspruch 1 oder 2, **dadurch gekennzeichnet, dass** das Gehäuse (1) an beiden Enden (6, 7) offen ausgebildet ist und/oder dass das Gehäuse (1) an einem Ende (6) einen Flansch (8) zur Anlage an die Wand (5) aufweist, wobei vorzugsweise der Flansch (8) integral mit dem Gehäuse (1) verbunden ist.

4. Wanddurchführung nach Anspruch 3, **dadurch gekennzeichnet, dass** dem Flansch (8) eine Dichtung (9) zur Abdichtung gegen die Wand (5) zugeordnet ist und/oder dass dem Flansch (8) eine Befestigungseinrichtung (10) zur Befestigung an der Wand (5) zugeordnet ist.

5. Wanddurchführung nach einem der Ansprüche 1 bis 4, **dadurch gekennzeichnet, dass** an einem Ende oder an dem anderen Ende (7) des Gehäuses (1) eine Blende (11) für einen zwischen dem Gehäuse (1) und der Wand (5) vorhandenen Spalt anordenbar ist, wobei vorzugsweise die Blende (11) ringförmig ausgebildet ist.

6. Wanddurchführung nach Anspruch 5, **dadurch gekennzeichnet, dass** der Innendurchmesser der Blende (11) geringfügig größer als der Außendurchmesser des Gehäuses (1) ist.

7. Wanddurchführung nach einem der Ansprüche 1 bis 6, **dadurch gekennzeichnet, dass** der Einschub (3) rohrförmig ausgebildet ist und/oder dass der Einschub (3) kreiszylinderförmig ausgebildet ist und/oder dass der Einschub (3) an einem Ende (12) einen Boden (13) aufweist.

8. Wanddurchführung nach einem der Ansprüche 1 bis 7, **dadurch gekennzeichnet, dass** der Einschub (3) an einem Ende oder an dem anderen Ende (14) einen Deckel (15) aufweist.

9. Wanddurchführung nach Anspruch 7 oder 8, **dadurch gekennzeichnet, dass** der Boden (13) und/oder der Deckel (15) eine umlaufende Dichtung (16) zur Abdichtung gegen das Gehäuse (1) aufweist und/oder dass der Boden (13) oder der Deckel (15) einen radial abragenden und umlaufenden Bund (17) aufweist.

10. Wanddurchführung nach einem der Ansprüche 1 bis 9, **dadurch gekennzeichnet, dass** dem Gehäuse (1) und/oder dem Einschub (3) Rast-, Klemm- und/oder Schraubelemente zur gegenseitigen Fixierung zugeordnet sind.

11. Wanddurchführung nach einem der Ansprüche 7 bis 10, **dadurch gekennzeichnet, dass** sich das Verbindungselement (2) durch einen Durchgang (18) in dem Deckel (15) und/oder Boden (13) erstreckt und/oder dass das Verbindungselement (2) mittels eines Flanschs (19) an dem Deckel (15) oder Boden (13) fixiert ist.

12. Wanddurchtührung nach einem der Ansprüche 7 bis 11, **dadurch gekennzeichnet, dass** das Verbindungselement (2) an einem Ende (14) des Einschubs (3) mittels eines Flanschs (19) an dem Deckel (15) oder Boden fixiert ist und sich an dem anderen Ende (12) durch einen Durchgang (18) in dem Boden (13) oder Deckel erstreckt.

13. Wanddurchführung nach Anspruch 11 oder 12, **dadurch gekennzeichnet, dass** zwischen dem Verbindungselement (2) und der Innenwandung des Durchgangs (18) zumindest bereichsweise ein Entkopplungselement (20) zur Wärmeentkopptung angeordnet ist.

14. Wanddurchführung nach einem der Ansprüche 11 bis 13, **dadurch gekennzeichnet, dass** zwischen dem Flansch (19) und dem Deckel (15) oder Boden zumindest bereichsweise ein Entkopplungselement (21) zur Wärmeentkopplung angeordnet ist.

15. Wanddurchführung nach einem der Ansprüche 1 bis 14, **dadurch gekennzeichnet, dass** das Verbindungselement (2) mindestens eine Rohr- oder Schlauchstrecke aufweist und/oder dass die Heizeinrichtung (22) und/oder die Kühleinrichtung einen Regler zur Aufrechterhaltung einer vorgebbaren Temperatur aufweisen.

## Claims

1. Wall bushing having a housing (1) which can be inserted into a wall passage (4) of a wall (5), and a connecting element (2) which can be arranged in the housing (1), the connecting element (2) being arranged in a module (3) which can be inserted into the housing (1),
**characterised in that** the wall bushing comprises a heating device (22) and/or a cooling device which are or is associated with the connecting element (2).

2. Wall bushing according to claim 1, **characterised in that** the housing (1) is of one-piece and/or tubular and/or circular-cylindrical form.

3. Wall bushing according to claim 1 or 2, **characterised in that** the housing (1) is open at both ends (6, 7), and/or **in that** the housing (1) has at one end (6) a flange (8) for contact with the wall (5), the flange (8) preferably being integrally connected to the housing (1).

4. Wall bushing according to claim 3, **characterised in that** there is associated with the flange (8) a seal (9) for sealing against the wall (5), and/or **in that** there is associated with the flange (8) a fixing device (10) for fixing to the wall (5).

5. Wall bushing according to any one of claims 1 to 4, **characterised in that** there can be arranged at one end or at the other end (7) of the housing (1) a membrane (11) for a gap that is present between the housing (1) and the wall (5).

6. Wall bushing according to claim 5, **characterised in that** the inside diameter of the membrane (11) is slightly larger than the outside diameter of the housing (1).

7. Wall bushing according to any one of claims 1 to 6, **characterised in that** the module (3) is of tubular form, and/or **in that** the module (3) is of circular-cylindrical form, and/or **in that** the module (3) has a base (13) at one end (12).

8. Wall bushing according to any one of claims 1 to 7, **characterised in that** the module (3) has a cover (15) at one end or at the other end (14).

9. Wall bushing according to claim 7 or 8, **characterised in that** the base (13) and/or the cover (15) has a circumferential seal (16) for sealing against the housing (1), and/or **in that** the base (13) or the cover (15) has a radially projecting and circumferential collar (17).

10. Wall bushing according to any one of claims 1 to 9, **characterised in that** there are associated with the housing (1) and/or with the module (3) snap-in, clamping and/or screw elements for mutual fixing.

11. Wall bushing according to any one of claims 7 to 10, **characterised in that** the connecting element (2) extends through a passage (18) in the cover (15) and/or base (13), and/or **in that** the connecting element (2) is fixed to the cap (15) or base (13) by means of a flange (19).

12. Wall bushing according to any one of claims 7 to 11, **characterised in that** the connecting element (2) is fixed to one end (14) of the module (3) by means of a flange (19) on the cover (15) or base and extends at the other end (12) through a passage (18) in the base (13) or cover.

13. Wall bushing according to claim 11 or 12, **characterised in that** a decoupling element (20) for heat decoupling is arranged at least in regions between the connecting element (2) and the inner wall of the passage (18).

14. Wall bushing according to any one of claims 11 to 13, **characterised in that** a decoupling element (21) for heat decoupling is arranged at least in regions between the flange (19) and the cover (15) or base.

15. Wall bushing according to any one of claims 1 to 14, **characterised in that** the connecting element (22) has at least one pipe or hose section, and/or **in that** the heating device (22) and/or the cooling device has a controller for maintaining the specifiable temperature.

## Revendications

1. Traversée murale comprenant un logement (1) pouvant être inséré dans un passage mural (4) d'une paroi (5) et un élément de raccordement (2) pouvant être agencé dans le logement (1), étant entendu que l'élément de raccordement (2) est agencé dans un tiroir (3) pouvant être inséré dans le logement (1),
**caractérisé en ce que** la traversée murale présente un dispositif de chauffage (22) et/ou un dispositif de refroidissement, qui est adjoint ou qui sont adjoints à l'élément de raccordement (2).

2. Traversée murale selon la revendication 1, **caractérisée en ce que** le logement (1) est réalisé d'une seule pièce et/ou en forme de tube et/ou en forme de cylindre circulaire.

3. Traversée murale selon la revendication 1 ou 2, **caractérisée en ce que** le logement (1) est réalisé de façon ouverte aux deux extrémités (6, 7) et/ou **en ce que** le logement (1) présente à une extrémité (6) une flasque (8) destinée à l'installation sur la paroi (5), étant entendu que de préférence, la flasque (8) est reliée de façon intégrale avec le logement (1).

4. Traversée murale selon la revendication 3, **caractérisée en ce qu'**un joint (9) destiné à la réalisation de l'étanchéité contre la paroi (5) est adjoint à la flasque (8) et/ou **en ce qu'**un dispositif de fixation (10) destiné à la fixation sur la paroi (5) est adjoint à la flasque (8).

5. Traversée murale selon l'une des revendications 1 à 4, **caractérisée en ce qu'**un diaphragme (11) pour une fente présente entre le logement (1) et la paroi (5) peut être agencé à une extrémité ou à l'autre extrémité (7) du logement (1), étant entendu que de préférence, le diaphragme (11) est réalisé en forme de bague.

6. Traversée murale selon la revendication 5, **caractérisée en ce que** le diamètre intérieur du diaphragme (11) est légèrement plus grand que le diamètre extérieur du logement (1).

7. Traversée murale selon l'une des revendications 1 à 6, **caractérisée en ce que** le tiroir (3) est réalisé en forme de tube et/ou **en ce que** le tiroir (3) est réalisé en forme de cylindre circulaire et/ou **en ce que** le tiroir (3) présente un fond (13) à une extrémité (12).

8. Traversée murale selon l'une des revendications 1 à 7, **caractérisée en ce que** le tiroir (3) présente un couvercle (15) à une extrémité ou à l'autre extrémité (14).

9. Traversée murale selon la revendication 7 ou 8, **caractérisée en ce que** le fond (13) et/ou le couvercle (15) présentent un joint périphérique (16) destiné à la réalisation de l'étanchéité contre le logement (1) et/ou en ce que le fond (13) ou le couvercle (15) présente une collerette périphérique et faisant saillie radialement (17).

10. Traversée murale selon l'une des revendications 1 à 9, **caractérisée en ce que** des éléments d'arrêt, de serrage et/ou de vissage destinés à une fixation réciproque sont adjoints au logement (1) et/ou au tiroir (3).

11. Traversée murale selon l'une des revendications 7 à 10, **caractérisée en ce que** l'élément de raccordement (2) s'étend à travers un passage (18) dans le couvercle (15) et/ou le fond (13) et/ou **en ce que** l'élément de raccordement (2) est fixé au couvercle (15) ou au fond (13) au moyen d'une flasque (19).

12. Traversée murale selon l'une des revendications 7 à 11, **caractérisée en ce que** l'élément de raccordement (2) est fixé au couvercle (15) ou au fond à une extrémité (14) du tiroir (3) au moyen d'une flasque (19) et s'étend jusqu'à l'autre extrémité (12) à travers un passage (18) dans le fond (13) ou le couvercle.

13. Traversée murale selon la revendication 11 ou 12, **caractérisée en ce qu'**un élément de découplage (20) destiné au découplage thermique est agencé, au moins dans une zone partielle, entre l'élément de raccordement (2) et la paroi intérieure du passage (18).

14. Traversée murale selon l'une des revendications 11 à 13, **caractérisée en ce qu'**un élément de découplage (21) destiné au découplage thermique est agencé, au moins dans une zone partielle, entre la flasque (19) et le couvercle (15) ou le fond.

15. Traversée murale selon l'une des revendications 1 à 14, **caractérisée en ce que** l'élément de raccordement (2) présente au moins un tronçon de tube ou de tuyau et/ou **en ce que** le dispositif de chauffage (22) et/ou le dispositif de refroidissement présentent un régulateur destiné au maintien d'une température pouvant être prédéterminée.
